# EUROPEAN PATENT APPLICATION

(11) **EP 0 644 415 A1**
(43) Date of publication of application: **22.03.1995**
(21) Application number: 94112379.6
(22) Date of filing: 08.08.1994
(51) Int. Cl.: G01N 15/10

(54) **Particle detection by measuring electrical discharge**

(30) Priority: 17.09.1993 US 123308
(71) Applicant: APPLIED MATERIALS, INC., Santa Clara California 95052-8039 (US)
(72) Inventor: Ye, Yan, Campbell, California 95008 (US); Gupta, Anand, San Jose, California 95131 (US)
(74) Representative: Kahler, Kurt, Dipl.-Ing.

(57) **Abstract**

An apparatus for detecting the presence of charged particulate matter in the exhaust line of a semiconductor processing system includes at least two electrodes (10, 12) mounted in the exhaust line. A high voltage power supply (16) maintains an electric field nearly equal to the breakdown field between the first and the second electrodes (10, 12). When charged particulate matter (14) passes through the electric field between the two electrodes (10, 12), the electric field is perturbed so that a transient current pulse flows in a circuit coupled to the two electrodes (10, 12). A pulse current monitoring circuit (18) detects the transient current associated with the passage of the charged particulate matter (14). In some circumstances, it is necessary to precharge the exhausted particulate matter before passing it by the electrodes (10, 12).

## Description

### Background of the Invention

Recently, there has been considerable interest in the use of particle monitoring systems within semiconductor processing equipment. Monitoring the level of particulates present in semiconductor processing equipment can provide useful information regarding the processing of semiconductor wafers. For example, elevated particulate levels in the exhaust line of a plasma deposition system may be associated with certain contamination problems that can cause reduced yields. As such, a particle monitoring system may be useful either as a tool for process development or as an *in situ* process monitoring tool. One application of a particle monitoring system in semiconductor processing equipment is described in U.S. Patent No. 5,083,865 entitled "Particle Monitor System and Method," owned by the assignee of the present invention, the disclosure of which is hereby incorporated by reference.

Most existing particle monitoring systems are based on light scattering. When such systems are installed in semiconductor processing equipment, a beam of light is directed into the exhaust line where some fraction of the input light scatters from particulate matter flowing within the exhaust line. An optical detector is disposed in the exhaust line so that only light scattered by the particulate matter is collected by the detector. The output signal from the detector corresponds to relative particulate levels within the exhaust line. One problem with particle monitoring systems based on light scattering is that such systems generally can only detect particles larger than 0.1 µm (microns) and, more practically, larger than 0.3 µm (microns).

U.S. Patent No. 3,787,746 to Atac describes a system useful for detecting the passage of energetic charged particles of the sort produced by radioactive decay reactions. The Atac detector includes a pair of electrodes biased to an electric field below breakdown and immersed in a special gaseous medium. When a high-velocity charged particle passes between the electrodes of the detector, the charged particle causes a portion of the gaseous medium to become ionized. If the particle is sufficiently energetic to ionize the gaseous medium and to produce an electrical discharge, a sustained current passes between the electrodes of the detector. This current can be measured in an attached circuit to signal the passage of the charged particle. Systems such as that described in the Atac patent are not suitable for detection of particulate matter in the exhaust line of semiconductor processing equipment. This is because the velocity of particulate matter in the exhaust line of the reactor is too low to ionize gas. Thus, particulate matter flowing in the exhaust line of semiconductor processing equipment would not produce a signal in a detector such as that described in the Atac patent.
The invention is defined in the independent claims 1, 9, 16 and 23, respectively.
Particular embodiments of the invention are set out in the dependent claims.

### Summary of the Preferred Embodiments

In accordance with the present invention, a particle monitoring system includes a first and a second electrode separated by a gap. A voltage supply coupled to the first and second electrodes generates an electric field near breakdown between the first and the second electrodes. A current monitoring circuit is also coupled to the first and the second electrodes so that the passage of a charged particle near the first and the second electrodes causes a transient current to be detected by the current monitoring circuit.

### Brief Description of the Drawings

FIG. 1 is a schematic representation of a particle monitoring system in accordance with the present invention.

FIG. 2 is a graph of the current-voltage characteristics of the FIG. 1 apparatus.

FIG. 3 is a schematic illustration of a semiconductor processing system incorporating a particle monitoring system in accordance with the present invention.

FIG. 4 is a schematic illustration of another embodiment of a particle monitoring system.

FIG. 5 illustrates a modification of the FIG. 4 system.

FIG. 6 is a schematic illustration of a particle monitoring system in accordance with the present invention.

FIG. 7 is a schematic illustration of a particle monitoring system incorporating a plurality of discrete electrodes.

FIG. 8 is a schematic illustration of another embodiment of the particle monitoring system of the present invention.

### Detailed Description of the Preferred Embodiments

The present invention relates to a particle monitoring system for detecting the passage of charged particles between two or more electrodes. The present invention also relates to a method of detecting particles. In preferred embodiments of the present invention, a pair of electrodes is disposed within the exhaust line of a semiconductor processing system. Charged particles passing between the electrodes distort an electric field maintained between the electrodes and cause a transient current to flow in a circuit coupled to the electrodes. High speed, high sensitivity current monitoring circuitry detects the transient current pulse. Current transients associated with the passage of charged particles may be correlated with the presence of particulate matter within, for example, the exhaust line of a semiconductor processing system.

In preferred embodiments of the present invention, an electric field is maintained between the electrodes of the particle monitoring system so that the electrode field is near to the point at which breakdown occurs. Current flows in the circuit coupled to the electrodes when the near-breakdown field between the electrodes is distorted by the passage of charged particle. As used herein, breakdown refers to the phenomena whereby the electric field between two points separated by a gap increases to a sufficient level so that an electric current begins to flow between the two points. Typically, the two points are electrodes and the gap between the electrodes may be filled by air or other gas at atmospheric, above atmospheric, or subatmospheric pressures. The particular electric potential that must be reached for an appreciable current to start flowing is referred to herein as the breakdown field. Breakdown is characterized by a sharp increase in the amount of current flowing between the electrodes in response to relatively little change in applied voltage. As is well known in the art, the voltage at which breakdown occurs is a complicated function of electrode shape, electrode geometry, and electrode separation, as well as a variety of other factors. For example, the pressure of the gas filling the electrode gap affects breakdown in accordance with Paschen's Law. Because of the many factors affecting breakdown, it is often most practical to determine breakdown characteristics empirically.

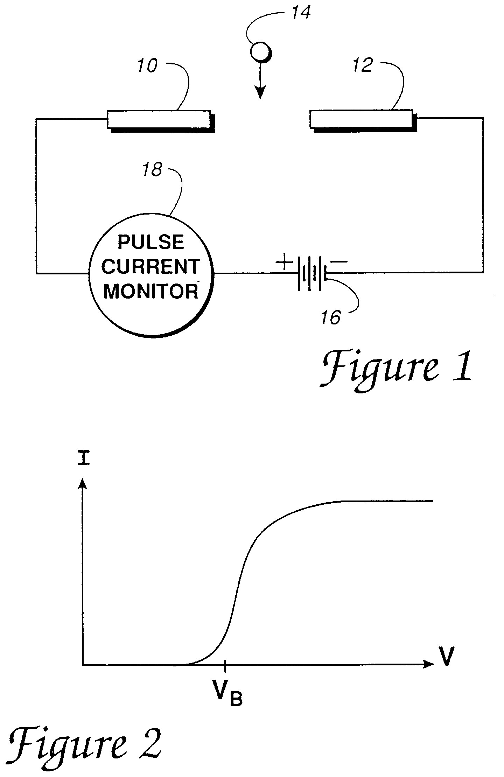

A simplified geometry for practicing the present invention is shown in FIG. 1. In this embodiment, a first electrode 10 is disposed adjacent to a second electrode 12 along the flow path of charged particulate matter such as charged particle 14. Although it is not indicated in the figure, these electrodes are preferably mounted in the exhaust line of a semiconductor processing system. In this embodiment, the electrodes are rigidly mounted in fixed relationship to one another and are electrically insulated from the walls of the exhaust line. The first electrode 10 is charged positively with respect to the second electrode 12 by a high voltage power supply 16. Typically, the high voltage power supply 16 is a DC power supply that is capable of supplying a voltage substantially above the particular breakdown voltage and is adjustable to establish the desired field between the electrodes. An electric field nearly at the breakdown field for the particular ambient environment is established between the two electrodes. As used herein, an electric field is "near" the breakdown field if a positive or negative perturbation in the electrode field will cause the current flowing in the circuit to increase or decrease more sharply than would happen if the electrodes were biased at a point well above or below breakdown. In accordance with this definition, a field "near" the breakdown field has a slightly different meaning for different electrode configurations and differently charged particles. Here again, the appropriate operating potential is best determined empirically. When an electrically charged particle such as charged particle 14 passes between or near the two electrodes, the electric field between the two electrodes is distorted. The distortion in the electrode field is accompanied by the flow of current in the electric circuit coupled to the two electrodes. Pulse current monitor 18 detects the transient current signal induced by the particulate matter. Typically, this transient signal will be sharp, as determined by the flow velocity of the particulate matter within the reduced pressure environment of the exhaust line of a semiconductor processing system. Thus, the signal characteristic of a charged particle is readily distinguishable from slowly varying noise signals.

FIG. 2 is a graph schematically illustrating the current-voltage characteristics of the FIG. 1 system. It is generally preferred that the electric field between the two electrodes be established at or near the most highly sloped portions of this curve. In other words, the electric field between the electrodes should be almost at breakdown. This may be observed experimentally by biasing the two electrodes up to the point where a small amount current flows between the two electrodes. At atmospheric pressure, the breakdown field of air is approximately 13,000 V/cm. The operating pressure in the exhaust line of semiconductor processing equipment is on the order of a few millitorr, and the corresponding breakdown field is substantially lower than that at atmospheric pressure. In practice, the breakdown voltage can be determined experimentally by biasing the electrodes until a current starts to flow between the electrodes. The allowable separation between electrodes is largely a function of what power supply is being used to create the electric field. It is desirable to separate the electrodes so that the electrode field samples a large area. However, this separation is limited by the requirement that a field near breakdown be maintained. Typically, an electrode gap on the order of one centimeter is readily achieved.

By operating the particle monitoring system of the present invention at the steepest part of the FIG. 2 current-voltage curve, the passage of a charged particle can be detected as a brief perturbation in the small current flowing between the two electrodes. Thus, the present particle monitoring system does not require ionization or the formation of a continuous current path between the electrodes. Rather, the present invention senses the distortion in the electrode field associated with the passage of a charged particle. Because a sufficiently high electric field is maintained between the electrodes, a charged particle passing through the electric field region creates an easily measured distortion in the electric field. This distortion in the electric field is accompanied by a flow of electrical charge in the circuit coupled to the electrodes. If this current is sufficiently large, it can be detected by a current meter wired in series with the electrodes.

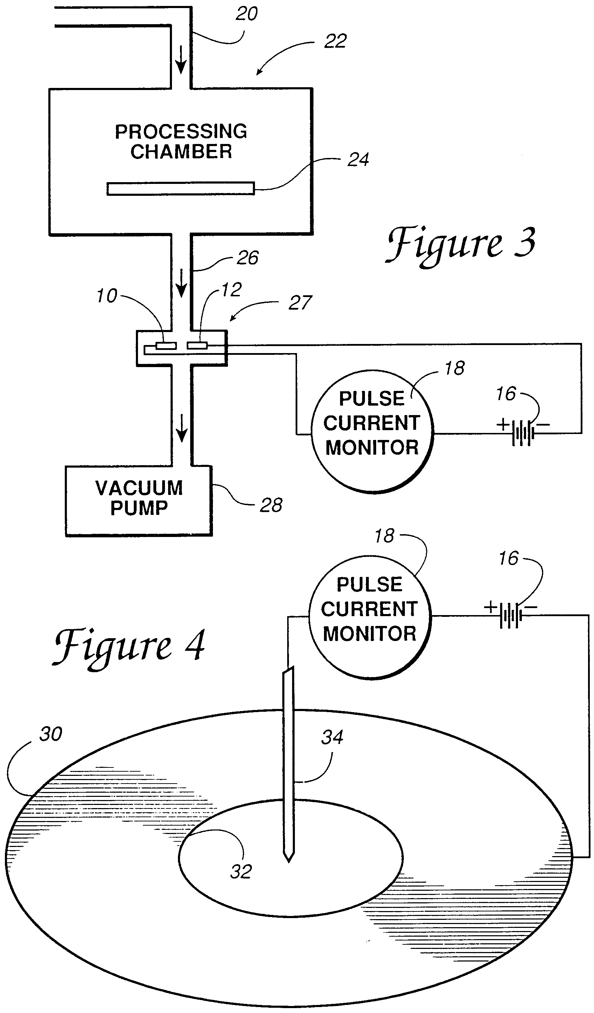

A particularly preferred embodiment of the present invention is illustrated in FIG. 3, which shows a particle monitoring system in accordance with the present invention disposed along the exhaust line of a semiconductor processing system. Generally speaking, a semiconductor processing system may include an input gas line 20, a processing chamber 22 that holds the semiconductor wafer 24 during processing, an exhaust line 26, and a vacuum pump 28. FIG. 3 shows the FIG. 1 particle monitoring system partially enclosed in a special line adapter 27 disposed along the exhaust line 26. In operation, particulate matter will be withdrawn from the processing chamber 22 via the exhaust line 26 by means of the vacuum pump 28. As the particulate matter is withdrawn from the processing chamber, the particulate matter will pass by the electrodes 10 and 12 of the particle monitoring system, and the passage of charged particles may be detected in the pulse current monitor 18.

One common semiconductor processing step is plasma etching, which is used during various stages of semiconductor device lithography. The particle monitoring system of the present invention can be used to monitor the progression of that process or it can be used to determine whether the processing chamber 22 and wafer 24 have been sufficiently cleaned after the completion of the etching process to continue with other processing steps. If the FIG. 3 system were used for plasma etching, the plasma etch would be established in a glow discharge region (not shown) and would be provided to the processing chamber 22 through input gas line 20. The plasma etch would then interact with the wafer 24, removing the desired material, which would then be extracted from the processing chamber 22 as particulate matter. Because the etching process is performed by a highly ionized plasma etch, the particulate matter travelling through the exhaust line 26 will be charged. Thus, the particle monitoring system will register a high level of particulate matter during the etching process. After the plasma etching process has been completed, particulate matter will continue to be withdrawn from the surface of the wafer 24 and from the walls of the processing chamber 22. It may be useful to monitor the level of particulate matter passing by electrodes 10 and 12 to determine when sufficient particulate matter has been withdrawn. The residual particulate matter may be a measure of the cleanliness of the processing chamber and might provide information regarding whether it is advisable to begin further processing steps.

FIG. 1 shows one electrode geometry that may be used in an embodiment of the present invention. In the FIG. 1 embodiment, two needle electrodes within the exhaust line of a reactor are disposed in relation to each other so that a gap exists between the tips of the two electrodes. In general, the requirements for the electrodes of the present invention are similar to the requirements for electrodes for use in corona chargers. Corona chargers are well known for use in electrophotographic printing and other non-contact charging applications. The electrode material is chosen to be rigid and should be durable so as to minimize electrode erosion in the reactive environment of the exhaust line. For example, silicon carbide is a preferred electrode material.

In the FIG. 1 geometry, only those particles that pass through the high electric field region created by the electrodes are detected. The interaction between the charged particle and the electrode field must be of a sufficient magnitude to be detected. This requirement places a constraint on both the level of charge present on the particulate matter and on the magnitude of the electric field necessary to detect a particle. The amount of charge present on particulates within the exhaust line will generally be controlled by the basic processing technique (i.e., plasma etching or deposition versus a thermal process) and by whether any precharging is employed for the particle detector. The electric field created by the electrodes falls off more rapidly than the field of a single charge because one electrode is charged positively and the other is charged negatively. In fact, the electric field produced by the electrodes has the field characteristics of an electric dipole at sufficiently great distances. Thus, the two needle electrode particle monitoring system of FIG. 1 has a limited range, and depending on the electrode separation and the size of the exhaust line, may not sample all of the particles flowing in the exhaust line.

The limited sampling associated with the first particle monitoring system geometry is acceptable for a variety of applications. For example, if only a fraction of the total particulate concentration need be sampled for a process control measurement, the simplicity and mechanical stability of the FIG. 1 geometry would most likely be preferred. In other circumstances, a higher level of detection may be necessary, and other detection geometries may be employed. For example, in the alternate embodiment shown in FIG. 4, a plate 30 with a substantially circular orifice 32 may be disposed across the cross section of an exhaust line. Plate 30 forms one electrode of the particle monitoring system and the limited flow orifice directs all particulate matter through the plate's orifice. The plate 30 may be, for example, metallic or it may be metal coated with a ceramic such as silicon carbide. A needle electrode 34 disposed near the center of the plate orifice 32 serves as the second electrode for the detector. Needle electrode 34 is formed of any material suitable for a corona charging electrode, such as silicon carbide. In practice, it may be preferred to place the supports and the wiring for the needle electrode downstream from the orifice to limit the disturbances to the exhaust line flow. The point of needle electrode 34 is then disposed at, or just below, the plane of the plate electrode 30. This is, however, only a practical consideration and the electrode 34 will function in the particle monitoring system whether it is disposed above or below the plate 30.

As with the FIG. 1 geometry, a high electric field must be maintained between the plate electrode and the needle electrode. This may be done in a variety of ways but, because it will often be preferable to maintain the potential of the plate electrode at or near the potential of the exhaust line wall, it may be preferable to maintain the plate electrode at or near electrical ground while maintaining a charge on the needle electrode. Under special circumstances, it might be useful to maintain electrical contact between the plate electrode and the walls of the exhaust line. This will not generally be possible because the walls of the exhaust line could act as a noise source, interfering with the current-based detection scheme of the present invention. If the exhaust line wall is not a significant noise source, then the plate electrode can be maintained at the potential of the exhaust line wall.

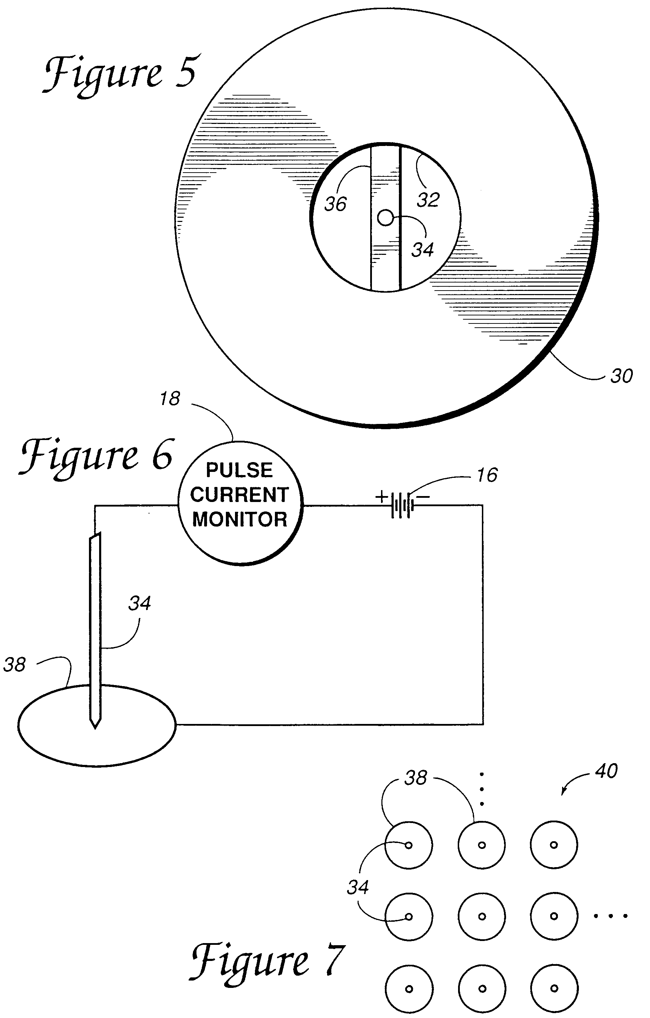

Electrical forces between the plate electrode 30 and the needle electrode 34 introduce a mechanical instability into the FIG. 4 geometry. Accordingly, it is necessary to maintain the needle electrode in a fixed structural relation to the orifice of the plate electrode. In this embodiment, a highly insulating ceramic spacer may be used to fix the relationship between the needle electrode and the orifice of the plate electrode. As is shown in FIG. 5, the ceramic spacer 36 may be rigidly fixed across a diameter of the orifice. Preferably, the ceramic spacer is thin so that it does not substantially disturb the exhaust line flow and is sufficiently thick in the dimension parallel to the exhaust line flow to maintain the needle electrode in a substantially fixed position with respect to the orifice in the plate. By maintaining the electrodes in a fixed relationship, noise signals created by variations in the relative positions of the electrodes are minimized.

Minimizing the variations in the relative positions of the electrodes is preferred but may not be essential to the performance of the present invention. The noise signals associated with such movements vary slowly in comparison to the signals associated with the passage of a charged particle. By associating only transient signals with the presence of particulate matter, the present particle detector's sensitivity to low frequency noise sources is minimized.

In other embodiments, the needle electrode may be replaced by a thin wire running through the plate's orifice where the wire is supported both above and below the plane of the plate electrode. Such an embodiment may be more mechanically stable than the simplified geometry shown in FIG. 4.

The limiting orifice of the FIG. 4 embodiment allows this particle monitoring system geometry to detect a greater fraction of the total particulate matter flowing in the exhaust line than will be detected using the two needle geometry of FIG. 1. Thus, in certain circumstances requiring high levels of particle detection, the FIG. 4 geometry may be preferred to the FIG. 1 geometry, because it is likely that a greater fraction of the total particles will be detected.

In other circumstances, the FIG. 4 geometry may be undesirable because the reduced flow cross section may cause back pressuring problems in the exhaust line of the semiconductor processing equipment. As is well known in the art, back pressure in the exhaust line of semiconductor processing equipment may produce undesirable contamination or other problems. Accordingly, it may be desirable to retain the high detection efficiency of the FIG. 4 embodiment in a less flow-restrictive geometry. From a circuit point of view, the functional portion of the plate electrode of the FIG. 4 geometry lies along the edge of the orifice. Thus, the plate electrode may be replaced by a wire loop, such as that shown in the particle monitoring system geometry of FIG. 6.

In this geometry, a substantially circular loop 38 serves as one electrode and the needle electrode 34 is disposed near the center of the loop. Charged particulate matter is detected as it passes between the loop electrode and the needle electrode. As with the FIG. 4 embodiment, the electrodes of the FIG. 6 particle monitoring system may be maintained in fixed relationship by a ceramic spacer. Depending on the rigidity of the loop material, two or more ceramic spacers, formed for example in an "X" configuration, may be necessary to maintain the relationship between the loop electrode 38 and the needle electrode 34. Also like the FIG. 4 device, the needle electrode in the FIG. 6 geometry might be replaced by a wire running through the loop electrode and supported on either side of the loop electrode.

A different embodiment of the FIG. 6 configuration is schematically shown in FIG. 7. An array 40 of loop electrodes is disposed across the cross section of the exhaust line of a semiconductor processing system (not shown). A corresponding needle electrode 34 is disposed near the center of, and in fixed relation to, each of the associated loop electrodes 38. This electrode array 40 may be wired in parallel to minimize the complexity of the support circuitry or each loop/needle pair may be wired individually. Such a wiring configuration allows not only better spatial resolution across the exhaust line cross section, but also allows better time resolution if a number of particles enter different portions of the detection grid at closely spaced intervals.

In practice, it may be preferable to maintain all of the loop electrodes and all of the needle electrodes in fixed relation using a single ceramic grid pattern.

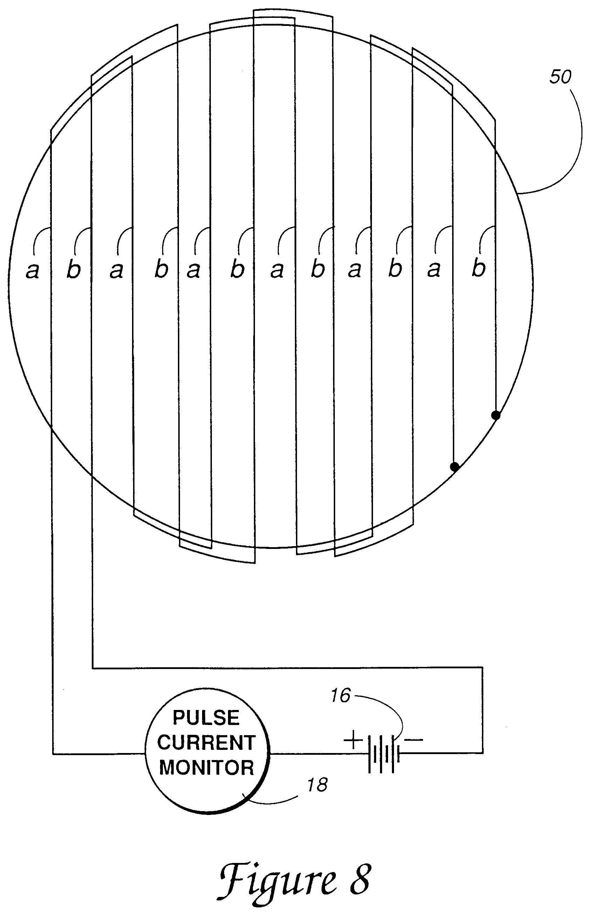

Still another embodiment of the present invention is illustrated in FIG. 8. Two wires "a" and "b" are placed across the exhaust line 50 of the processing equipment so that they are parallel and spaced at substantially equal intervals. The two wires are arranged so that they alternately cross the exhaust line to produce the interwoven structure shown. In this embodiment, the "a" wire may comprise the negative electrode and the "b" electrode may comprise the positive electrode. It is preferred to take care to insulate or otherwise electrically isolate the two wires "a" and "b." Charged particulate matter is detected as it passes between any two strands of the electrode wires.

When the particle monitoring system of the present invention is used in conjunction with semiconductor processing equipment in which plasma is used for processing, particulate matter in the exhaust line will be charged. Typically, particulate matter in the exhaust line of plasma-based processing equipment will carry a charge having a magnitude of approximately 10⁴ times the electron charge. In such processing equipment, particulate matter carries a sufficient charge to be detected using the present invention. On the other hand, in processing equipment that uses thermal processes, exhausted particulate matter will normally not be charged and it may be necessary to charge neutral particulates prior to their entry into the particle detector. Neutral charge particles may be charged by placing a precharging unit upstream from the electrodes of the particle monitoring system. Such a precharger would be necessary to charge particulate matter produced by thermal processes such as tungsten CVD or thermal oxidation.

Suitable precharging may be accomplished by, for example, corona charging between parallel plates (field charging) or by charging particles using a radioactive source (diffusion charging). Corona charging is typically more effective on large particles. Radioactive charging is necessary to ensure charging of small particles. The amount of radioactive material necessary for diffusion charging is sufficiently small so as to be practical for most systems. Typically, less radioactive material will be necessary than is found in a common home smoke detector.

Often, not only will particulate matter on the order of one tenth of a micron be present in the exhaust line of a piece of semiconductor processing equipment, there will also be free electrons or other small charged particles. Electrons or other small particulate matter can act as a noise source in the present system. In such instances, it may be desirable to remove the less massive of the charged particles from the exhaust stream before the particles reach the electrodes of the particle detector. A precipitator may be used to remove very light charged particles from the exhaust line, so that a greater fraction of the particulates detected are of at least a certain size. Such a precipitator may be formed, for example, by placing plates adjacent to either wall of the exhaust line upstream from the particle detector. An electric field is placed across these plates so that the small particulates are collected on the plates while heavier particles pass through. Typically, an electric field on the order of 5 V/cm will be sufficient to separate out the small particulate matter from the heavier particulate matter. For processing equipment which does not produce charged particulates, a precharger is placed upstream from the precipitator. Thus, neutral particles would pass through the precharger before entering the precipitator. The more massive particles pass through the precipitator and are detected by passing through the electric field of the particle detector.

While the present invention has been described with reference to specific preferred embodiments thereof, it will be understood by those skilled in this art that various changes may be made without departing from the true spirit and scope of the invention. In addition, many modifications may be made to adapt the invention to a given situation without departing from its essential teachings.

## Claims

1. A particle monitoring system comprising:
a first and a second electrode (10, 12), said first electrode (10) being separated from said second electrode (12);
a voltage supply (16) coupled to said first and said second electrodes (10, 12), said voltage supply (16) generating an electric field near the breakdown field between said first and said second electrodes (10, 12);
a current monitoring circuit (18) coupled to said first and said second electrodes (10, 12);
whereby the passage of a charged particle (14) near said first and said second electrodes (10, 12) causes a transient current to be detected by said current monitoring circuit (18).

2. A particle monitoring system according to claim 1, in which the voltage supply (16) maintains a sufficient bias between said first and said second electrode (10, 12) so that a current flows between said first and said second electrodes (10, 12) without the passage of a charged particle (14).

3. A particle monitoring system according to claim 1 or 2,
wherein at least one of said electrodes (10, 12) comprises silicon carbide.

4. A particle monitoring system according to any of claims 1 to 3,
wherein at least one of said first and said second electrodes (10, 12) has a needle-like shape.

5. A particle monitoring system according to any of claims 1 to 3,
wherein said first electrode comprises a plate (30) having an orifice (32).

6. A particle monitoring system according to any of claims 1 to 3 and 5,
wherein said second electrode comprises a wire supported on either side of said first electrode (30).

7. A particle monitoring system according to any of claims 1 to 6,
further comprising a precharging device that applies a charge to neutral particulate matter.

8. A particle monitoring system according to any of the preceding claims,
further comprising a precipitator,
wherein said precipitator separates light particulate matter from heavy particulate matter.

9. An exhaust line particle monitoring system comprising:
an exhaust line (26) which defines a flow path for particulate matter;
a first and a second electrode (10, 12) mounted in rigid relationship to one another, said first and said second electrode (10, 12) at least partially disposed in said flow path for particulate matter;
a voltage source (16) coupled to said first and said second electrode (10, 12), said voltage source (16) maintaining an electric field near breakdown between said first and said second electrode (10, 12); and
a current monitoring circuit (18) coupled to said first and said second electrode (10, 12).

10. An exhaust line particle monitoring system according to claim 9,
further comprising a precharger disposed upstream of said first and said second electrode (10, 12),
wherein said precharger applies an electrical charge to said particulate matter.

11. An exhaust line particle monitoring system according to claim 9 or 10,
wherein said first and said second electrode comprise parallel wires (a, b).

12. An exhaust line particle monitoring system according to claim 11,
wherein said first and said second electrode cross said exhaust line (26) a plurality of times.

13. An exhaust line particle monitoring system according to claim 9 or 10,
wherein at least one (10; 12; 34) of said first and said second electrodes has a needie-like shape.

14. An exhaust line particle monitoring system according to any of claims 9 to 13,
further comprising a precipitator disposed upstream from said first and said second electrodes (10, 12, 30, 34, a, b).

15. An exhaust line particle monitoring system according to any of claims 9 to 14,
wherein said voltage source (16) is in series with said current monitoring circuit (18).

16. A semiconductor processing system comprising:
a processing chamber (22);
an exhaust line (26) coupled to said processing chamber (22) so that particulate matter withdrawn from said processing chamber (22) flows through said exhaust line (26);
a first and a second electrode (10, 12) mounted within said exhaust line (26);
a voltage source (16) coupled to said first and said second electrode (10, 12), said voltage source (16) being adjustable to maintain an electric field near the breakdown field between said first and said second electrodes (10, 12); and
a current monitoring circuit (18) coupled to said first and said second electrode (10, 12).

17. A semiconductor processing system according to claim 16,
wherein said voltage source (16) maintains a voltage between said first and said second electrode (10, 12) so that a substantially constant current flows between said first and said second electrode (10, 12).

18. A semiconductor processing system according to claim 16 or 17,
further comprising a precharging circuit disposed along said exhaust line (26) between said processing chamber (22) and said first and said second electrode (10, 12).

19. A semiconductor processing system according to any of claims 16 to 18,
wherein at least one of said electrodes (10, 12) comprises silicon carbide.

20. A semiconductor processing system according to claims 16 to 18,
wherein said first and said second electrode (a, b) comprise parallel wires.

21. A semiconductor processing system according to claim 20,
wherein said first and said second electrode (a, b) cross said exhaust line (50) a plurality of times.

22. A semiconductor processing system according to any of claims 16 to 21,
wherein said voltage source (16) is connected in series with said current monitoring circuit (18).

23. A method of detecting particles comprising the steps of:
biasing a first and a second electrode (10, 12) to an electrode field substantially equal to the breakdown field;
passing particulate matter near said first and said second electrode (10, 12), said particulate matter perturbing said electrode field; and
detecting a transient current signal in a circuit coupled to said first and said second electrode (10, 12).

24. The method of claim 23,
further comprising the step of monitoring current flow between said first and said second electrode (10, 12) while biasing said first and said second electrodes (10, 12) to said electrode field approximately equal to the breakdown field.

25. The method of claim 23 or 24,
further comprising the step of charging neutral particulate matter before passing it near said first and second electrodes (10, 12).

26. The method of any of claims 23 to 25,
further comprising the step of separating light particulate matter from heavy particulate matter before passing it near said first and second electrodes (10, 12).
